# EUROPÄISCHE PATENTSCHRIFT

(11) **EP 3 227 045 B1**
(45) Veröffentlichungstag und Bekanntmachung des Hinweises auf die Patenterteilung: **21.08.2019**
(21) Anmeldenummer: 15804349.7
(22) Anmeldetag: 24.11.2015
(51) Int. Cl.: B23D 59/00, B23Q 15/24

(54) **VERFAHREN ZUM SÄGEN EINES LANGPROFILS UND MASCHINE ZUM ABLÄNGEN DERSELBEN**
METHOD FOR SAWING A PROFILE AND MACHINE FOR CROSS-CUTTING THE SAME
PROCÉDÉ DE SCIAGE D'UN PROFILÉ ET MACHINE POUR LA COUPE TRANSVERSALE DE CE DERNIER

(30) Priorität: 01.12.2014 DE 102014117618
(43) Veröffentlichungstag der Anmeldung: 11.10.2017
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2015/077471
(87) Internationale Veröffentlichungsnummer: WO 2016/087266

(56) Entgegenhaltungen:
- WO-A1-2007/014979
- JP-A- H08 238 619
- US-A- 5 216 365

## Beschreibung

Die Erfindung betrifft ein Verfahren zum Sägen eines Langprofils, indem eine Sägescheibe mit entlang eines kreisförmigen Außenumfanges der Sägescheibe angeordneten Zähnen rotiert wird, die Sägescheibe aus einer frei rotierenden Stellung auf eine Außenwandung des Langprofils vorgeschoben wird und ein Nullzahn als erster der Zähne in das Material der Außenwandung eingreift.

Die Erfindung betrifft auch eine Maschine zum Ablängen von Abschnitten eines Langprofils mit einer Aufnahme für das Langprofil einer Sägescheibe mit entlang eines kreisförmigen Außenumfanges der Sägescheibe angeordneten Zähnen und einer Vorschubeinrichtung für die Sägescheibe in Richtung der Aufnahme.

Verfahren zum Ablängen von Abschnitten eines Langprofils sowie dafür verwendete Maschinen sind im Stand der Technik in Form von Rohrschneidemaschinen natürlich hinlänglich bekannt.

Nachteilig an der genannten Rohrschneidemaschine ist, dass die verwendeten kreisrunden Sägeblätter selbst bei hoher Richtgüte nicht exakt eben ausgebildet sind, sondern einen Seitenschlag aufweisen. Beim Rotieren der Sägescheibe in der Rohrschneidemaschine springen dadurch die Sägezähne entlang der Drehachse der Sägescheibe gleichsam geringfügig vor und zurück, und es ergibt sich zufällig, welcher Zahn als erster Zahn die Außenwandung des Rohres trifft. Das ist insbesondere deshalb nachteilig, weil die Sägeblätter seitlich selbst bei hoher Richtgüte leicht beweglich sind und bereits der erste Zahn eine kleine Sägenut in die Außenwandung des Langprofiles einfräst und damit die Richtung der Sägenut für den weiteren Sägevorgang im Wesentlichen festlegt. Ein Zahn mit Seitenschlag legt nachteiligerweise eine schiefe Sägenut fest. Sägeblätter sind nicht statisch, sondern verändern sich durch Temperatur, Belastung und Verschleiß.

In der DE 10 2006 000 297 A1 ist ein kreisförmiges Sägeblatt offenbart, das entlang seines Umfanges Diamantkörper aufweist. Zwei in Umfangsrichtung aufeinanderfolgende Sektoren sind mit jeweils einem Planlaufabweichungsbereich ausgebildet, wobei die aufeinanderfolgenden Planlaufabweichungsbereiche hinsichtlich einer Mittelebene zu unterschiedlichen Seiten gerichtet sind.

In der DE 43 08 032 C2 ist eine Sägemaschine offenbart, wobei das Profilmaterial im Bereich zwischen seinem ständig in vertikaler Richtung eingespannten hinteren Ende und seinem vorderen Bereich zur definierten Lage in der Nachführebene während des schrittweisen Nachführens des Profilmaterials unter Rollreibung derart abgestützt wird, dass die schrittweise Nachführbewegung des eingespannten hinteren Endes ungehindert bei gleichzeitiger optimaler Unterstützung gewährleistet ist.

Die DE 691 03 033 T2 betrifft eine Maschine zum Aufnehmen eines fortlaufenden Materialstücks mit einer Schlitteneinheit und einer Einrichtung zum hin- und her bewegen der Schlitteneinheit entlang einer vorbestimmten Bahn, einem Schneidblatt und einer Einrichtung, die das Schneidblatt am Träger lagert, wobei eine Einrichtung zum Bewegen des Schneidblattes radial einwärts zur Achse vorgesehen ist, während das Schneidblatt um diese Achse rotiert und die genannte Bahn schneidet, sodass sich das Schneidblatt während es diese Bahn schneidet, auf einer geraden Linie quer zur genannten Bahn bewegt.

In der WO 2007/014979 A1 ist eine Säge offenbart. Dabei ist ein Kreissägeblatt offenbart mit seitlich entlang des Sägeblattes angeordneten Magneten, die es gewährleisten, dass das Sägeblatt möglichst flach während des Sägevorganges verbleibt, so dass ein möglichst gerader Sägeschnitt ermöglicht wird. Die Druckschrift kann als nächstkommender Stand der Technik angesehen werden.

Das Dokument JP-H08238619A offenbart ein Verfahren zum Sägen eines Langprofils, indem eine Sägescheibe mit entlang eines kreisförmigen Umfanges der Sägescheibe angeordneten Zähnen frei rotiert wird, die Sägescheibe aus einer frei rotierenden Stellung auf eine Außenwandung des Langprofils vorgeschoben wird, und ein Nullzahn als erster der Zähne in das Material der Außenwandung eingreift.

Es ist in einem ersten Aspekt Aufgabe der Erfindung, ein Verfahren zum Ablängen von Langprofilabschnitten zur Verfügung zu stellen, das einen möglichst senkrechten Schnitt in das Langprofil ermöglicht, und es ist im zweiten Aspekt Aufgabe der vorliegenden Erfindung, eine Maschine zur Verfügung zu stellen, mit der ein möglichst senkrechter Schnitt in die Außenwandung eines Langprofils einbringbar ist.

Die Aufgabe wird in ihrem ersten Aspekt durch ein eingangs genanntes Verfahren mit den kennzeichnenden Merkmalen des Anspruchs 1 gelöst.

Unter einem Langprofil werden Rohre oder Vollprofile, vorzugsweise aus Metall oder vorwiegend aus Metall verstanden. Sie sind im Querschnitt senkrecht zur Längsrichtung vorzugsweise kreisförmig, es sind aber auch andere Querschnitte denkbar.

Erfindungsgemäß werden während der freien Rotation der Sägescheibe Seitenschläge der Zähne bestimmt, und ein Zahn mit minimalem, vorzugsweise gar keinem Seitenschlag wird bestimmt, und der bestimmte Zahn wird als Nullzahn verwendet.

Die Erfindung macht von der Idee Gebrauch, dass in der weit überwiegenden Anzahl an Fällen die Sägescheibe in beide Richtungen aus der idealen Nulllage herausgebogen ist. Einige Sägezähne weisen einen rechten und andere einen linken Seitenschlag auf, d. h. bei Rotation der Sägescheibe wird es zumindest einen, tatsächlich sogar mindestens zwei Zähne geben, die eine minimale Abweichung aus der Nulllage, also einen minimalen Seitenschlag, vorzugsweise überhaupt keinen Seitenschlag aufweisen. Die Erfindung macht weiter von der Idee Gebrauch, den Seitenschlag der Zähne der Sägescheibe während der freien Rotation kurz vor dem eigentlichen Zerspanvorgang zu bestimmen, und den Zahn mit dem minimalen Seitenschlag zu bestimmen und den bestimmten Zahn als Nullzahn zu verwenden, also mit genau diesem einen Nullzahn als erstem Zahn während des eigentlichen Zerspanvorganges in das Material der Außenwandung des Langprofils einzugreifen. Weil durch den Nullzahn bereits eine kleine Sägenut in die Außenwandung eingefräßt wird, die etwa bei 0,05 mm bis 0,35 mm liegt, bestimmt die Richtung der Sägenut, aufgrund der Biegsamkeit der Sägescheibe entlang der Rotationsachse die gesamte Richtung der Sägenut für den weiteren Zerspanvorgang. Die Erfindung ermöglicht es, die Sägenut fast senkrecht, vorzugsweise exakt senkrecht zur Längsrichtung des Langprofils anzusetzen. Die Längsrichtung des Langprofils und die Rotationsachse der Sägescheibe sind vorzugsweise parallel zueinander angeordnet.

Bei den Langprofilen handelt es sich vorzugsweise um Vollprofile oder Rohre, vorzugsweise um Metallprofile.

Günstigerweise werden fortlaufend Seitenschläge der Zähne während der freien Rotation relativ zu einem positionsfesten Abstandssensor gemessen und fortlaufend Winkelstellungen der Sägescheibe gemessen und aus den Messwerten ein Seitenschlag-Winkelstellungsprofil der Sägescheibe bestimmt, und aus dem Profil wird ein Zahn mit minimalem Seitenschlag bestimmt. Da die Sägescheiben üblicherweise rechte und linke Seitenschläge aufweisen, weist das Profil mindestens zwei Nulldurchgänge auf. Vorzugsweise wird die Winkelstellung des Nulldurchgangs des Profils bestimmt und der zu dieser Winkelstellung zugehörige Nullzahn der Sägescheibe ermittelt. Der Nullzahn wird dann als erster Zahn in die Außenwandung des Langprofils eingefräßt.

Das erfindungsgemäße Verfahren setzt einen gesteuerten Sägevorgang voraus. Die Stellung der Sägescheibe wird vorzugsweise mit Hilfe einer NC-Steuerung, wie sie im Stand der Technik bekannt ist, bestimmt und die Sägescheibe erhält einen ebenfalls NC gesteuerten Vorschub in Richtung der Außenwandung des Langprofils. Sowohl der Sägeblattantrieb als auch der Vorschubantrieb sind jeweils eine NC-Achse.

Der Abstandssensor ist in einem konstanten, auch während des Vorschubs gleichbleibenden Abstand zur Rotationsachse der Sägescheibe positioniert, und der Abstand des Sensors von der idealen Nulllage der Sägscheibe ist bekannt und vorgegeben. Dazu wird vorzugsweise eine Nulllage der Sägescheibe ermittelt. Vorzugsweise werden der Vorschub und die Rotation der Sägescheibe derart gesteuert, dass der Zahn mit minimalem Seitenschlag der Nullzahn wird.

Vorzugsweise wird vor jedem dem Sägen nachfolgenden Sägen eines weiteren Langprofils ein Zahn mit minimalem Seitenschlag bestimmt und als Nullzahn verwendet. Die Nullzähne können von Sägevorgang zu Sägevorgang variieren, weil die Sägeblätter nicht statisch sind, sondern sich durch Temperatur, Belastung und Verschleiß von Sägevorgang zu Sägevorgang etwas verändern können. Dadurch wird ein optimaler Schnitt für jeden Sägevorgang erzielt.

Günstigerweise wird für ein nachfolgendes Sägen ein dem Nullzahn des Sägens am weitesten beabstandeter nachfolgender Nullzahn bestimmt. Die Nullzähne direkt aufeinanderfolgender Sägevorgänge weichen nur geringfügig um wenige oder einen einzigen oder gar keinen Zahn voneinander ab. Da in der Regel zwei Nullzähne pro Sägeblatt vorhanden sind, werden die Nullzähne abwechselnd benutzt, oder zumindest wird der vom benutzten Nullzahn am weitesten entfernte Nullzahn für den direkt nachfolgenden Sägevorgang benutzt.

In Ihrem zweiten Aspekt wird die Aufgabe durch eine eingangs genannte Maschine mit den kennzeichnenden Merkmalen des Anspruchs 7 erfüllt.

Ein Abstandssensor ist seitlich entlang einer Rotationsachse neben den Zähnen der Sägescheibe angeordnet, der erfindungsgemäß auf die Zähne der Sägescheibe gerichtet ist und Seitenschläge der Zähne während der freien Rotation der Sägescheibe misst und eine Auswerteeinrichtung, die mit dem Abstandsensor verbunden ist und mit der Messwerte des dAbstandssensor zuführbar sind.

Der Abstandssensor ist vorzugsweise verstellbar gegenüber der Rotationsachse, insbesondere senkrecht zur Rotationsachse verstellbar angeordnet. Der Abstandssensor wird für einen vorgegebenen Sägescheibentyp derart angeordnet, dass er mehr als die halbe Sägescheibendicke beabstandet, seitlich in Längsrichtung versetzt, neben den vorbeilaufenden Zähnen der Sägescheibe angeordnet ist. Rotationsachse der Sägescheibe und eine Längsrichtung des Langprofils sind vorzugsweise parallel zueinander angeordnet.

Der Abstand des Abstandssensors von der Rotationsachse kann dem Sägescheibentyp angepasst werden.

Erfindungsgemäß ist eine Winkelmesseinrichtung für eine Rotationsstellung der Sägescheibe vorgesehen, die mit der Auswerteeinrichtung in Verbindung steht und mit der ein Seitenschlag-Winkelstellungsprofil der Sägescheibe ermittelbar ist und mit der ein Nullzahn bestimmbar ist. Die erfindungsgemäße Maschine ermöglicht es daher, durch Bestimmung der Nullstellen des Seitenschlag-Winkelstellungsprofils die Winkelstellung ohne Seitenschlag zu bestimmen und den der Winkelstellung zugeordneten Zahn zu bestimmen, der als Nullzahn ausgewählt wird. Dazu ist vorzugsweise eine Steuerung für die Rotation und für den Vorschub der Sägescheibe vorgesehen, die es gestattet, den Nullzahn als ersten Zahn auszuwählen, der in das Material der Außenwandung des Langprofils eingreift.

Günstigerweise gestattet es die Steuerung, für ein nachfolgendes Sägen einen dem Nullzahn des Sägens am weitesten beabstandeten nachfolgenden Nullzahn zu bestimmen. Durch den Wechsel der Nullzähne wird deren Verschleiß gemindert.

Alle der oben genannten Maschinen sind zur Durchführung einer oder mehrerer der vorher genannten Verfahren geeignet.

Die Erfindung wird anhand eines Ausführungsbeispiels in drei Figuren beschrieben. Dabei zeigen:
- Fig. 1: eine schematische seitliche Ansicht einer in einer Aufnahme eingelegten Sägescheibe in drei verschiedenen Rotationsstellungen mit Seitenschlag,
- Fig. 2: ein Seitenschlag-Winkelstellungsprofil der Sägescheibe in Fig. 1,
- Fig. 3: ein Metallrohr mit verschiedenen Sägenuten.

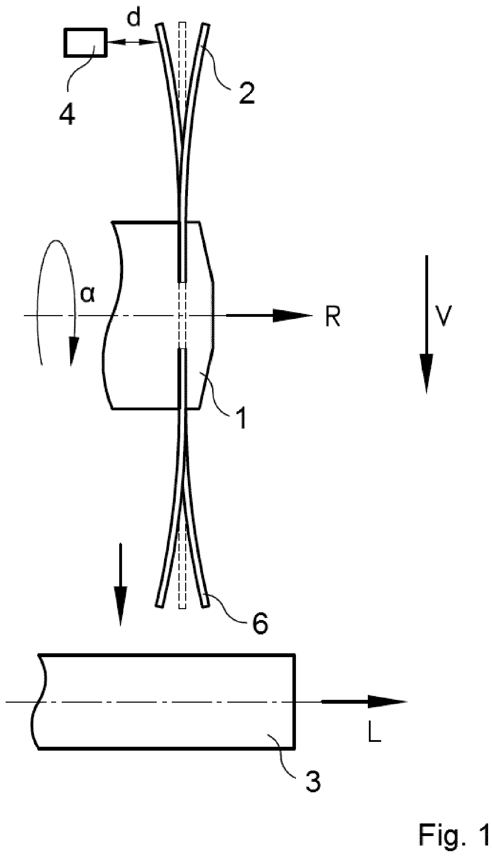

Fig. 1 zeigt eine Aufnahme 1 mit einer entlang eines Umfanges kreisrunden Sägescheibe 2 in einer Seitenansicht. Die Sägescheibe 2 ist Teil einer Rohrschneidemaschine, die in Fig. 1 nicht dargestellt ist. Die Sägescheibe 2 ist erdbodenabseitig in Fig. 1 oberhalb eines Metallrohres 3 positioniert. Die Sägescheibe 2 ist Bauteil einer Rohrschneidemaschine, die in Fig. 1 nicht dargestellt ist. Die Sägescheibe 2 ist NC gesteuert. Eine Winkelstellung der Aufnahme 1 und damit der in die Aufnahme 1 relativ zu ihr rotationsfest eingespannten Sägescheibe 2 ist durch die NC-Steuerung ermittelbar. Die NC-Steuerung ermöglicht es darüber hinaus, die Sägescheibe 2 durch Vorschub der Aufnahme 1 in Richtung des abzulängenden Metallrohres 3 vorzuschieben. Eine Vorschubrichtung V ist dabei senkrecht zu einer Längsrichtung L des abzulängenden Metallrohres 3 angeordnet. Während des Vorschubs rotiert die Sägescheibe 2 zunächst frei und ohne Kontakt mit dem Metallrohr 3 und wird so lange vorgeschoben, bis der eigentliche Zerspanvorgang des Sägeverfahrens beginnt, bei dem Zähne 6 der Sägescheibe 2 in Kontakt mit dem Metallrohr 3 treten.

Die in Fig. 1 dargestellte Sägescheibe 2 weist wie fast alle handelsüblich erhältlichen Sägescheiben 2 einen sogenannten Seitenschlag d auf. Unter dem Seitenschlag d wird eine Abweichung von der idealen ebenen Ausformung der Sägescheibe 2 verstanden. Die Sägescheibe 2 ist, auch wenn sie korrekt in die Aufnahme 1 eingespannt ist, nicht in jeder Winkelstellung exakt senkrecht zur Außenwandung des Metallrohres 3 ausgerichtet, sondern je nach Winkelstellung α der Sägescheibe 2 weist der der Außenwandung am dichtesten kommende Zahn 6 einen Seitenschlag d, d. h. eine Abweichung von der Nulllage auf. Die Nulllage ist durch eine senkrechte Linie bestimmt, die durch die Position der idealen ebenen Sägescheibe 2 in der Aufnahme 1 festgelegt ist. Die Nullposition der Sägescheibe 2 ohne Seitenschlag ist in Fig. 1 durch eine gestrichelt eingezeichnete Sägescheibe 2 dargestellt.

Darüber hinaus sind in Fig. 1 zwei Winkelstellungen α derselben Sägescheibe 2 durch durchgezogen eingezeichnete Sägescheiben 2 dargestellt. Die durchgezogen eingezeichnete Sägescheibe 2 zeichnet sich durch den Seitenschlag d aus. Neben der Sägescheibe 2 ist in Richtung der Rotationsachse der Sägescheibe 2 verschoben ein Abstandssensor 4 vorgesehen. Dabei handelt es sich um einen induktiven Abstandssensor 4, der den Abstand der Zähne 6 vom Abstandssensor 4 im 0,1 Mikrometerbereich genau bestimmt. Der Abstandssensor 4 ermöglicht es, jede 1,0 Millisekunden einen Messwert aufzunehmen, sodass bei einer Umdrehungsanzahl von 300 Umdrehungen pro Minute etwa 200 Messpunkte pro Umdrehung der Sägescheibe 2 genommen werden können. Der Abstandssensor 4 ist so geeicht, dass er einen Abstand von der idealen Nulllage des Zahnes 6 der Sägescheibe 2 misst. Je nach Steuerung sind auch kürzere Zyklen möglich.

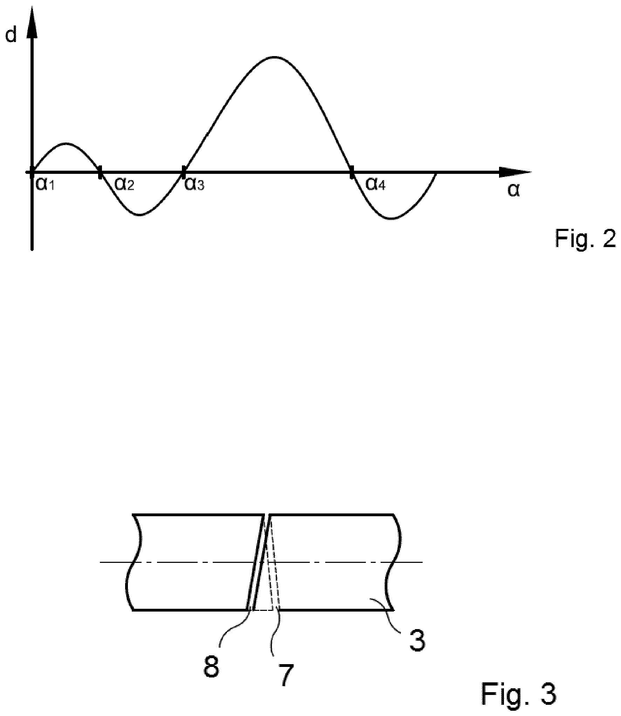

Fig. 2 zeigt eine prinzipielle Kurve des Seitenschlags d in Abhängigkeit von der Winkelstellung α der Sägescheibe 2 bei einem vollen Umlauf der Sägescheibe 2. Das in Fig. 2 dargestellte Profil entsteht durch Interpolation der aufgenommenen Messwerte. Fig. 2 zeigt insbesondere, dass zu vier verschiedenen Winkelstellungen α₁, α₂, α₃, α₄ kein Seitenschlag d vorhanden ist, d. h. die in diesen Winkelstellungen α₁, α₂, α₃, α₄ am Abstandssensor 4 vorbeistreichenden Zähne 6 weisen keinen Seitenschlag d auf. Die Zähne 6 mit minimalem oder überhaupt keinem Seitenschlag d werden hier als Nullzähne Z₁, Z₂, Z₃, Z₄ bezeichnet. Eine nicht dargestellte Auswerteeinrichtung ermöglicht es, die Sägescheibe 2 so zu steuern, dass einer der Nullzähne Z₁, Z₂, Z₃, Z₄ während des Zerspanungsvorganges als erster Zahn 6 auf die Außenfläche des Metallrohres 3 trifft und etwas Material aus der Außenfläche des Metallrohres 3 abspant. Der Vorschub pro Zahn 6 in Vorschubrichtung V beträgt etwa 0,05 mm bis 0,35 mm. Weil der erste Zahn 6 die Richtung einer Sägenut 7 im Metallrohr 3 vorgibt, ist es entscheidend, dass dieser Zahn 6 keinen Seitenschlag d aufweist, um einen exakt rechtwinkligen Schnitt in die Außenwandung des Metallrohres 3 einzubringen. Die Sägescheiben 2 sind seitlich leicht biegsam, sodass die Richtung der durch den ersten Zahn 6 vorgegebenen Sägenut 7 die Gesamtrichtung der Sägenut 7 bestimmt.

Fig. 3 zeigt in einem Metallrohr 3 eingezeichnete zwei mögliche Sägenuten 7, 8. Die eine Sägenut 8 wird in herkömmlicher Weise durch eine Sägescheibe 2 erzeugt, deren Nullzahn Z₁, Z₂, Z₃, Z₄ einen Seitenschlag d aufweist, während die zweite gestrichelte Sägenut 7 in einem Abspanvorgang erzeugt wurde, bei dem der Nullzahn Z₁, Z₂, Z₃, Z₄ keinen Seitenschlag d aufweist.

### Bezugszeichenliste

- 1: Aufnahme
- 2: Sägescheibe
- 3: Metallrohr
- 4: Abstandssensor

- 6: Zahn
- 7: Sägenut
- 8: Sägenut

- α: Winkel
- α₁: Winkelstellung
- α₂: Winkelstellung
- α₃: Winkelstellung
- α₄: Winkelstellung

- d: Seitenschlag

- V: Vorschubrichtung
- L: Längsrichtung

- Z₁: Nullzahn
- Z₂: Nullzahn
- Z₃: Nullzahn
- Z₄: Nullzahn

## Patentansprüche

1. Verfahren zum Sägen eines Langprofils (3), indem
eine Sägescheibe (2) mit entlang eines kreisförmigen Außenumfanges der Sägescheibe (2) angeordneten Zähnen (6) frei rotiert wird,
die Sägescheibe (2) aus einer frei rotierenden Stellung auf eine Außenwandung des Langprofils (3) vorgeschoben wird,
und ein Nullzahn (Z₁, Z₂, Z₃, Z₄) als erster der Zähne (6) in das Material der Außenwandung eingreift,
**dadurch gekennzeichnet, dass** während der freien Rotation der Sägescheibe (2) Seitenschläge (d) der Zähne (6) bestimmt werden und ein Zahn (6) mit minimalem Seitenschlag (d) bestimmt wird und als Nullzahn (Z₁, Z₂, Z₃, Z₄) verwendet wird.

2. Verfahren nach Anspruch 1,
**dadurch gekennzeichnet, dass** fortlaufend Seitenschläge (d) der Zähne (6) während der Rotation zu einem positionsfesten Abstandssensor (4) gemessen werden und fortlaufend Winkelstellungen (α) der Sägescheibe (2) gemessen werden, ein Seitenschlag-Winkelstellungsprofil der Sägescheibe (2) bestimmt wird und
aus dem Profil ein Zahn (6) mit minimalem Seitenschlag (d) bestimmt wird.

3. Verfahren nach Anspruch 1 oder 2,
**dadurch gekennzeichnet, dass** ein Vorschub und die Rotation der Sägescheibe (2) derart gesteuert werden, dass der Zahn (6) mit minimalem Seitenschlag (d) der Nullzahn (Z₁, Z₂, Z₃, Z₄) wird.

4. Verfahren nach einem der Ansprüche 1, 2 oder 3,
**dadurch gekennzeichnet, dass** eine Nulllage der Sägescheibe (2) ermittelt wird.

5. Verfahren nach einem der Ansprüche 1 bis 4,
**dadurch gekennzeichnet, dass** vor jedem dem Sägen nachfolgenden Sägen eines weiteren Langprofils (3) ein Zahn (6) mit minimalem Seitenschlag (d) bestimmt wird und als Nullzahn (Z₁, Z₂, Z₃, Z₄) verwendet wird.

6. Verfahren nach einem der vorstehenden Ansprüche,
**dadurch gekennzeichnet, dass** für ein nachfolgendes Sägen der dem Nullzahn (Z₁, Z₂, Z₃, Z₄) des Sägens am weitesten beabstandeter nachfolgender Nullzahn (Z₁, Z₂, Z₃, Z₄) bestimmt wird.

7. Maschine zum Ablängen von Abschnitten eines Langprofils (3) mit einer Aufnahme (1) für das Langprofil (3),
einer Sägescheibe (2) mit entlang eines kreisförmigen Außenumfanges der Sägescheibe (2) angeordneten Zähnen (6),
einer Vorschubrichtung (V) für die Sägescheibe (2) in Richtung der Aufnahme (1), einem seitlich entlang einer Rotationsachse neben den Zähnen (6) der Sägescheibe (2) angeordneten Abstandssensor (4), und
einer Auswerteeinrichtung, die mit dem Abstandssensor (4) verbunden ist und der Messwerte des Abstandssensors (4) zuführbar sind, **dadurch gekennzeichnet dass** der Abstandssensor auf die Zähne (6) der Sägescheibe (2) gerichtet ist und Seitenschläge (d) der Zähne (6) während der freien Rotation der Sägescheibe (2) misst und die Maschine ist weiterhin **gekennzeichnet durch** eine Winkelmesseinrichtung für eine Rotationsstellung der Sägescheibe (2), die mit der Auswerteinrichtung in Verbindung steht und mit der ein Seitenschlag-Winkelstellungsprofil der Sägescheibe (2) ermittelbar ist und mit der ein Nullzahn (Z₁, Z₂, Z₃, Z₄) bestimmbar ist, wobei ein Zahn (6) mit minimalem Seitenschlag (d) bestimmt wird und als Nullzahn (Z1,Z2,Z3,Z4) verwendet wird.

8. Maschine nach Anspruch 7,
**gekennzeichnet durch** eine Steuerung für die Rotation und den Vorschub der Sägescheibe (2), die es gestattet, den Nullzahn (Z₁, Z₂, Z₃, Z₄) als ersten Zahn (6) auszuwählen, der in das Material der Außenwandung des Langprofils (3) eingreift.

9. Maschine nach einem der Ansprüche 7 oder 8,
**dadurch gekennzeichnet, dass** die Steuerung es gestattet, für ein nachfolgendes Sägen den dem Nullzahn (Z₁, Z₂, Z₃, Z₄) des Sägens am weitesten beabstandeten nachfolgenden Nullzahn (Z₁, Z₂, Z₃, Z₄) zu bestimmen.

## Claims

1. Method for sawing a long profile (3) in that a sawing disc (2) having teeth (6) arranged around a circular outer circumference of the sawing disc (2) is rotated freely, the sawing disc (2) is advanced from a freely rotating position to an outer wall of the long profile (3), and a zero tooth (Z₁, Z₂, Z₃, Z₄) engages as the first of the teeth (6) in the material of the outer wall, **characterised in that** during the free rotation of the sawing disc (2), lateral runouts (d) of the teeth (6) are determined, and a tooth (6) having a minimum lateral runout (d) is determined and used as the zero tooth (Z₁, Z₂, Z₃, Z₄).

2. Method according to claim 1, **characterised in that** lateral runouts (d) of the teeth (6) are continuously measured during the rotation relative to a distance sensor (4) in a fixed position and angular positions (α) of the saw disc (2) are continuously measured, a lateral runout angular position profile of the sawing disc (2) is determined and a tooth (6) with minimal lateral runout (d) is determined from the profile.

3. Method according to claim 1 or 2, **characterised in that** an advance and the rotation of the sawing disc (2) are controlled in such a way that the tooth (6) with minimal lateral runout (d) becomes the zero tooth (Z₁, Z₂, Z₃, Z₄).

4. Method according to one of claims 1, 2 or 3, **characterised in that** a zero position of the sawing disc (2) is determined.

5. Method according to one of claims 1 to 4, **characterised in that** after the sawing, a tooth (6) with minimal lateral runout (d) is determined and is used as the zero tooth (Z₁, Z₂, Z₃, Z₄) before each subsequent sawing of a further long profile.

6. Method according to one of the preceding claims, **characterised in that** a subsequent zero tooth (Z₁, Z₂, Z₃, Z₄) spaced furthest apart from the zero tooth (Z₁, Z₂, Z₃, Z₄) of the sawing operation is determined for subsequent sawing.

7. Machine for cutting sections of a long profile (3) to length with a receptacle (1) for the long profile (3) of a sawing disc (2) with teeth (6) arranged around a circular outer circumference of the sawing disc (2) and an advancing direction (V) for the sawing disc (2) in the direction of the receptacle (1), a laterally along an axis of rotation alongside the teeth (6) of the sawing disc (2) arranged distance sensor (4), which is directed towards the teeth (6) of the sawing disc (2) and measures lateral runouts (d) of the teeth (6) during the free rotation of the sawing disc (2), and an evaluation unit which is connected to the distance sensor (4) by which measured values from the distance sensor (4) can be supplied to the evaluation unit, **characterised by** an angle measuring device for a rotational position of the sawing disc (2) which is connected to the evaluation unit and by which a lateral runout angular position profile of the sawing disc (2) can be determined and by which a zero tooth (Z₁, Z₂, Z₃, Z₄) can be determined.

8. Machine according to claim 7, **characterised by** a control for the rotation and the advancing of the sawing disc (2) which makes it possible to select the zero tooth (Z₁, Z₂, Z₃, Z₄) as first tooth (6) which engages in the material of the outer wall of the long profile (3).

9. Machine according to one of claims 7 or 8, **characterised in that** the control makes it possible for a subsequent zero tooth (Z₁, Z₂, Z₃, Z₄) spaced furthest apart from the zero tooth (Z₁, Z₂, Z₃, Z₄) of the sawing to be determined for subsequent sawing.

## Revendications

1. Procédé pour scier un profilé longitudinal (3)
en faisant tourner librement un disque tronçonneur (2) avec des dents (6) placées le long d'une circonférence extérieure circulaire du disque tronçonneur (2),
le disque tronçonneur (2) étant avancé, à partir d'une position en rotation libre, sur une paroi extérieure du profilé longitudinal (3)
et une dent zéro (Z₁, Z₂, Z₃, Z₄) se mettant en prise en tant que première des dents (6) dans le matériau de la paroi extérieure,
**caractérisé en ce que** des voiles latéraux (d) des dents (6) sont déterminés pendant la rotation libre du disque tronçonneur (2) et qu'une dent (6) avec un voile latéral minimal (d) est déterminée et utilisée comme dent zéro (Z₁, Z₂, Z₃, Z4).

2. Procédé selon la revendication 1, **caractérisé en ce que** des voiles latéraux (d) des dents (6) sont mesurés en continu pendant la rotation vers un capteur de distance à position fixe (4) et que des positions angulaires (α) du disque tronçonneur (2) sont mesurées en continu, qu'un profil de position angulaire du voile latéral du disque tronçonneur (2) est déterminé et qu'une dent (6) avec un voile latéral minimal (d) est déterminée à partir du profil.

3. Procédé selon la revendication 1 ou 2, **caractérisé en ce qu'**une avancée et la rotation du disque tronçonneur (2) sont commandées de telle manière que la dent (6) avec un voile latéral minimal (d) devient la dent zéro (Z₁, Z₂, Z₃, Z₄).

4. Procédé selon l'une des revendications 1, 2 ou 3, **caractérisé en ce qu'**une position zéro du disque tronçonneur (2) est déterminée.

5. Procédé selon l'une des revendications 1 à 4, **caractérisé en ce qu'**avant chaque sciage d'un autre profilé longitudinal (3) qui suit le sciage une dent (6) avec un voile latéral minimal (d) est déterminée et utilisée comme dent zéro (Z₁, Z2, Z3, Z4).

6. Procédé selon l'une des revendications précédentes, **caractérisé en ce que** la dent zéro (Z₁, Z₂, Z₃, Z₄) qui suit la dent zéro (Z₁, Z₂, Z₃, Z₄) du sciage en étant la plus éloignée est déterminée pour un sciage subséquent.

7. Machine pour couper à longueur des sections d'un profilé longitudinal (3) avec un logement (1) pour le profilé longitudinal (3), un disque tronçonneur (2) avec des dents (6) placées le long d'une circonférence extérieure circulaire du disque tronçonneur (2), un sens d'avancement (V) pour le disque tronçonneur (2) en direction du logement (1), un capteur de distance (4) placé latéralement le long d'un axe de rotation à coté des dents (6) du disque tronçonneur (2) et un dispositif d'évaluation qui est relié au capteur de distance (4) et auquel des valeurs de mesure du capteur de distance (4) peuvent être amenées, **caractérisée en ce que** le capteur de distance est orienté vers les dents (6) du disque tronçonneur (2) et mesure des voiles latéraux (d) des dents pendant la rotation libre du disque tronçonneur et la machine est de plus **caractérisée par** un dispositif de mesure angulaire pour une position de rotation du disque tronçonneur qui est en relation avec le dispositif d'évaluation et avec lequel un profil de position angulaire du voile latéral du disque tronçonneur (2) peut être déterminé et avec lequel une dent zéro (Z₁, Z₂, Z₃, Z₄) peut être déterminée, cependant qu'une dent (6) avec un voile latéral minimal (d) est déterminée et utilisée comme dent zéro (Z₁, Z₂, Z₃, Z₄).

8. Machine selon la revendication 7, **caractérisée par** une commande pour la rotation et l'avancement du disque tronçonneur (2) qui permet de sélectionner la dent zéro (Z₁, Z₂, Z₃, Z₄) comme première dent (6) qui se met en prise dans le matériau de la paroi extérieure du profil longitudinal (3).

9. Machine selon l'une des revendications 7 ou 8, **caractérisée en ce que** la commande permet de déterminer pour un sciage subséquent la dent zéro (Z₁, Z₂, Z₃, Z₄) qui suit la dent zéro (Z₁, Z₂, Z₃, Z₄) du sciage en étant la plus éloignée.
